# EUROPÄISCHE PATENTSCHRIFT

(11) **EP 3 804 888 B1**
(45) Veröffentlichungstag und Bekanntmachung des Hinweises auf die Patenterteilung: **28.02.2024**
(21) Anmeldenummer: 20199108.0
(22) Anmeldetag: 29.09.2020
(51) Int. Cl.: B23B 3/06, B23B 41/02

(54) **DREHMASCHINE ZUM BEARBEITEN VON WERKSTÜCKEN MIT EINER TIEFBBOHREINHEIT ZUM FERTIGEN VON TIEFBOHRUNGEN SOWIE TIEFBOHREINHEIT ALS SOLCHE**
LATHE FOR MACHINING WORKPIECES WITH A DEEP DRILLING UNIT FOR MAKING DEEP HOLES AND DEEP DRILLING UNIT
TOUR DESTINÉE AU TRAITEMENT DE PIÈCES DOTÉE D'UNE UNITÉ DE FORAGE PROFOND DESTINÉE À LA PRODUCTION DE FORAGES PROFONDS AINSI QU'UNE TELLE UNITÉ DE FORAGE PROFOND

(30) Priorität: 09.10.2019 DE 102019127099
(43) Veröffentlichungstag der Anmeldung: 14.04.2021
(73) Patentinhaber: Bach, Hubert, 78073 Bad Dürrheim (DE)
(72) Erfinder: BACH, Hubert, 78073 Bad Dürrheim (DE); REMCHE, Georg, 78665 Frittlingen (DE); BLESSING, Michael, 78628 Rottweil (DE)
(74) Vertreter: Westphal, Mussgnug & Partner Patentanwälte mbB

(56) Entgegenhaltungen:
- EP-A2- 0 885 677
- WO-A1-2013/139518
- DD-A- 40 530
- DD-A1- 261 535
- DE-A1- 3 530 479

## Beschreibung

Die vorliegende Erfindung betrifft eine Drehmaschine gemäß dem Oberbegriff des Anspruchs 1 zum Bearbeiten von Werkstücken mit einer Tiefbohreinheit zum Fertigen von Tiefbohrungen. Weiterhin betrifft die Erfindung eine derartige Tiefbohreinheit gemäß dem Oberbegriff des Anspruchs 9 als solche. Eine derartige Drehmaschine und eine derartige Tiefbohreinheit sind aus dem Dokument DE 35 30 479 A1 bekannt.

Unter Tiefbohrungen sollen im Folgenden Bohrungen verstanden werden, deren Bohrungstiefe T größer als das Dreifache des Durchmessers D ist.

Die zum Fertigen derartiger Tiefbohrungen verwendeten Tiefbohrer müssen entsprechend lang ausgebildet sein. Hierdurch sind die Tiefbohrer im Betrieb einem relativ hohen Biegemoment ausgesetzt, wodurch es einerseits zu Schwingungen kommen kann, die sich negativ auf die Präzision der Tiefbohrungen auswirken. Andererseits können die Biegemomente zu einem Brechen der Tiefbohrer führen, so dass insbesondere bei kleinen Durchmessern D das erreichbare Verhältnis von Bohrungstiefe T zu Durchmesser D begrenzt ist. Bei kleinen Bohrungsdurchmessern kann das Verhältnis der Bohrungstiefe T zu Durchmesser bis zu 100, bei größeren Bohrungsdurchmessern in Sonderfällen bis zu 900 betragen.

Um derartige Tiefbohrungen zu fertigen, werden entsprechend ausgebildete Tiefbohrmaschinen verwendet. Da aber üblicherweise ein betreffendes Werkstück, welches mit derartigen Tiefbohrungen versehen werden soll, auch auf andere Weise insbesondere spanend verarbeitet wird, muss das betreffende Werkstück beispielsweise von einer Drehmaschine zu einer räumlich getrennt angeordneten Tiefbohrmaschine transferiert und dort erneut eingespannt werden, wodurch sich der Fertigungsprozess entsprechend verlängert und verteuert.

In der DE 10 2008 060 297 B3 ist eine Drehmaschine offenbart, bei welcher ein Werkstück neben der üblicherweise vorgenommenen Bearbeitung mittels eines stillstehenden Werkzeugs, insbesondere eines Drehmeißels, auch noch mittels eines angetriebenen Werkzeugs bearbeitet werden kann. Zum Fertigen von Tiefbohrungen eignet sich die in der DE 10 2008 060 297 B3 gezeigte Drehmaschine jedoch nicht.

Die US 9 630 254 B2 zeigt eine Drehmaschine, bei welcher auch eine Tiefbohreinheit zum Fertigen von Tiefbohrungen vorgesehen ist. Insofern ermöglicht es die dort gezeigte Drehmaschine, ohne die Notwendigkeit eines erneuten Einspannens in eine separate Tiefbohrmaschine ein Werkstück zu drehen und mit Tiefbohrungen zu versehen. Nachteilig an der dort gezeigten Vorrichtung ist jedoch, dass die Tiefbohreinheit relativ viel Raum einnimmt, so dass sie je nach Abmessungen des Werkstücks mit diesem kollidieren könnte. Insofern ist man in den Abmessungen des zu bearbeitenden Werkstücks eingeschränkt.

Weitere Drehmaschinen sind in der DE 35 30 479 A1, der EP 0 885 677 A2 und der DD 261 535 A1 offenbart.

Aufgabe einer Ausführungsform der vorliegenden Erfindung ist es, eine Drehmaschine vorzuschlagen, mit welcher auch Tiefbohrungen gefertigt werden können, ohne in den Abmessungen des bearbeitbaren Werkstücks beschränkt zu sein. Zudem soll es möglich sein, bestehende Drehmaschinen so nachzurüsten, dass auch Tiefbohrungen gefertigt werden können. Des Weiteren liegt einer Ausgestaltung der vorliegenden Erfindung die Aufgabe zugrunde, eine Tiefbohreinheit zu schaffen, welche mit einer Drehmaschine betrieben werden kann.

Diese Aufgabe wird mit den in den Ansprüchen 1 und 9 angegebenen Merkmalen gelöst. Vorteilhafte Ausführungsformen sind Gegenstand der Unteransprüche.

Eine Ausführungsform der Erfindung betrifft eine Drehmaschine zum Bearbeiten von Werkstücken, umfassend
- ein Maschinenbett,
- eine Arbeitsspindel, welche um eine Spindeldrehachse drehbar im Maschinenbett gelagert ist,
- eine Arbeitsspindel-Antriebseinheit zum Antreiben der Arbeitsspindel, und
- eine am Maschinenbett befestigte Tiefbohreinheit zum Fertigen von Tiefbohrungen mit
   ∘ zumindest einem um eine Tiefbohrerdrehachse drehbar gelagerten Bohrfutter zum Aufnehmen eines Tiefbohrers,
   ∘ einer Tiefbohrer-Antriebseinheit zum Antreiben des Bohrfutters, und
   ∘ einer Verfahreinrichtung zum Verfahren des Bohrfutters entlang der Tiefbohrerdrehachse zwischen einer Grundstellung und einer Arbeitsstellung.

Erfindungsgemäß verlaufen die Spindeldrehachse und die Tiefbohrerdrehachse parallel zueinander. In vielen Fällen verlaufen die Bohrungsachsen parallel zu der Drehachse des betreffenden Werkstücks. Daher ist die parallele Anordnung der Spindeldrehachse und der Tiefbohrerdrehachse für die Bearbeitung der meisten Werkstücke am geeignetsten ist. Die Drehmaschine in dieser Ausführungsform kann kompakt gestaltet werden.

Die vorschlagsgemäße Drehmaschine weist eine Tiefbohreinheit auf, mit welcher Tiefbohrungen gefertigt werden können. Dabei kann die Tiefbohreinheit direkt oder indirekt, beispielsweise über ein Gehäuse oder eine Tragstruktur, mit dem Maschinenbett verbunden sein. Insbesondere aufgrund der Tatsache, dass die Tiefbohreinheit eine eigene Tiefbohrer-Antriebseinheit aufweist, mit welcher der in das Bohrfutter eingespannte Tiefbohrer um seine eigene Tiefbohrer-Drehachse gedreht werden kann, ist es möglich, bestehende Drehmaschinen mit der vorschlagsgemäßen Tiefbohreinheit nachzurüsten. Darüber hinaus umfasst die vorschlagsgemäße Tiefbohreinheit eine Verfahreinrichtung, mit welcher das Bohrfutter entlang der Tiefbohrer-Drehachse zwischen einer Grundstellung und einer Arbeitsstellung verfahren werden kann. Die Verfahreinrichtung kann eine oder mehrere Führungsschienen umfassen, auf welcher zumindest das Bohrfutter, aber auch die Tiefbohrer-Antriebseinheit oder Teile hiervon, entlang der Tiefbohrer-Drehachse mit einer entsprechend ausgebildeten Vorschubvorrichtung verfahren werden kann. Dabei ist die Grundstellung so gewählt, dass die Tiefbohreinheit nicht mit den Werkstücken in Berührung kommen kann. Für den Fall, dass das betreffende Werkstück nicht mit Tiefbohrungen versehen werden soll, kann daher die Drehmaschine auf herkömmliche Weise betrieben werden. Für den Fall, dass das betreffende Werkstück mit Tiefbohrungen versehen werden soll, kann zunächst die drehende Bearbeitung durchgeführt werden, während der sich die Tiefbohreinheit in der Grundstellung befindet und somit die drehende Bearbeitung nicht stört. Nach Abschluss der drehenden Bearbeitung wird dann die Tiefbohreinheit in die Arbeitsstellung gefahren, in welcher die Tiefbohrungen gefertigt werden. Selbstverständlich kann auch in der umgekehrten Reihenfolge vorgegangen werden. Ein Umspannen ist nicht nötig.

Das Werkstück kann zeitparallel auf der Hauptseite (Hauptspindelseite) drehend bearbeitet werden und zeitgleich mit einer Tiefbohrung versehen werden. Voraussetzung hierzu ist, dass die Achse der Tiefbohrung mit der Drehachse des Werkstücks zusammenfällt. Alternativ kann das Werkstück zunächst gedreht und in einem zweiten Arbeitsgang mit einer oder mehreren Tiefbohrungen versehen werden. Danach wird das Werkstück erst mit der Abgreifspindel abgegriffen und kann dann rückseitig bearbeitet werden. Die Tiefbohrung kann mit einem feststehenden Tiefbohrer gefertigt werden, also nicht rotierend, oder aber mit einem angetriebenen Tiefbohrer, auch als Bohrwerkzeug bezeichnet. Wenn mit einem angetriebenen Tiefbohrer arbeitet wird, liegen bis zu 6500 U/min (Umdrehungen pro Minute) auf der Hauptspindel und 6000 U/min am Tiefbohrer. Bei gegensinnigen Drehrichtungen addieren sich die Drehzahlen, so dass in der Summe mit 12 500 U/min gearbeitet werden kann. Dadurch reduziert sich die Taktzeit.

In einer weitergebildeten Ausführungsform können die Arbeitsspindel-Antriebseinheit und die Tiefbohrer-Antriebseinheit von einer gemeinsamen Antriebseinheit gebildet werden oder die Tiefbohrer-Antriebseinheit kann von der Arbeitsspindel-Antriebseinheit angetrieben werden. Unter einer gemeinsamen Antriebseinheit soll eine Antriebseinheit verstanden werden, mit welcher sowohl die Arbeitsspindel als auch das Bohrfutter angetrieben werden. Wie eingangs erwähnt, kann es von Vorteil sein, die Antriebsspindel und das Bohrfutter mit jeweils einer eigenen Antriebseinheit anzutreiben, insbesondere dann, wenn bestehende Drehmaschinen nachgerüstet werden sollen. Allerdings kann eine Reduzierung von Bauteilen realisiert werden, wenn eine Drehmaschine von vornherein mit einer derartigen Tiefbohreinheit entwickelt wird. Alternativ ist es auch möglich, dass die Tiefbohrer-Antriebseinheit von der Arbeitsspindel-Antriebseinheit angetrieben wird. In diesem Fall wird kein separater Motor für die Tiefbohrer-Antriebseinheit benötigt, vielmehr genügt es, einen entsprechend verzweigten Antriebsstrang vorzusehen. Insofern ist in dieser Ausführungsform die Tiefbohrer-Antriebseinheit im Wesentlichen auf den Antriebsstrang, der insbesondere die Getriebe und die Wellen sowie deren Lagerung umfasst, reduziert. Auch hierdurch lässt sich eine Reduzierung von Bauteilen realisieren, wobei in dieser Alternative durchaus auch eine Nachrüstbarkeit vorgesehen sein kann.

Bei einer weitergebildeten Ausführungsform kann die Tiefbohreinheit eine Lünetteneinheit zum Führen des Tiefbohrers aufweisen. Wie eingangs erwähnt, sind die Tiefbohrer im Betrieb vergleichsweise hohen Biegemomenten ausgesetzt, die einerseits zu Schwingungen und andererseits zum Bruch des Tiefbohrers führen können. Mit der Lünetteneinheit kann zumindest ein Tiefbohrer beabstandet vom Bohrfutter geführt werden, so dass die Belastung des Tiefbohrers reduziert werden kann. Folglich werden die Schwingungen und die Gefahr des Bruchs des Tiefbohrers reduziert.

Bei einer weiteren Ausführungsform kann die Lünetteneinheit mit der Verfahreinrichtung entlang der Tiefbohrerdrehachse verfahrbar sein. In dieser Ausführungsform bleibt der Abstand zwischen der Lünetteneinheit und dem Bohrfutter immer gleich. Insofern ändert sich die Lagerung des Tiefbohrers im Betrieb nicht, wodurch sich auch die Führung nicht verändert. In dieser Ausführungsform wird daher für gleichbleibende Bohrbedingungen gesorgt, wodurch die Qualität der Tiefbohrungen auf einem gleich bleibenden Niveau gehalten werden kann.

Eine weitergebildete Ausführungsform zeichnet sich dadurch aus, dass die Verfahreinrichtung einen Pneumatik-, Elektro- oder Hydraulikzylinder umfasst. Bei Elektrozylindern handelt es sich im Wesentlichen um einen Elektromotor, der mit einer Gewindespindel zusammenwirkt. Die Drehbewegung des Elektromotors wird in eine Längsbewegung der Gewindespindel umgewandelt. Die Verwendung von Pneumatikzylindern, Elektrozylindern oder Hydraulikzylindern ermöglicht es, die Verfahreinrichtung einfach zu gestalten, so dass sie sich kostengünstig bereitstellen lässt.

Nach Maßgabe einer weiteren Ausführungsform weist die Verfahreinrichtung eine Verriegelungseinrichtung auf, mit welcher das Bohrfutter in der Arbeitsstellung verriegelbar ist. Je nach Ausgestaltung der Tiefbohreinheit kann die Verfahreinrichtung auch dazu genutzt werden, den Tiefbohrer im Betrieb vorzuschieben. Allerdings ist es bei vielen Drehmaschinen möglich, das Werkstück gegenüber den Werkzeugen zu bewegen, so dass die Verfahreinrichtung nicht dazu ausgelegt werden muss, diesen Vorschub gegenüber dem Werkstück bereitzustellen. Es genügt daher, die Verfahreinrichtung so auszugestalten, dass sie die Tiefbohreinheit zwischen der Arbeitsstellung und der Grundstellung hin und her bewegen kann. Besondere Anforderungen an die Bewegung bestehen in dieser Ausführungsform nicht. Ist die Arbeitsstellung einmal erreicht, wird diese mit der Verriegelungseinrichtung fixiert. Zudem kann vorgesehen sein, die Tiefbohreinheit und folglich auch das Bohrfutter auch in Zwischenstellungen zu fixieren, insbesondere auch in der Grundstellung. Auf diese Weise lässt sich die Tiefbohreinheit kostengünstig bereitstellen.

Eine weitere Ausführungsform zeichnet sich dadurch aus, dass die Tiefbohreinheit eine Kühlmittelzuführeinrichtung zum Zuführen von Kühlmittel zum Tiefbohrer aufweist. Wie mehrfach erwähnt, sind die Tiefbohrer im Betrieb hohen Belastungen ausgesetzt. Insofern kann die Gefahr eines Bruchs der Tiefbohrer mit einer ausreichenden Zufuhr von Kühlmittel deutlich reduziert werden. Dabei kann das Kühlmittel unter Hochdruck zum Tiefbohrer geführt werden. Weiterhin dient das unter Hochdruck zum Tiefbohrer geführte Kühlmittel auch zur Spanabfuhr, wodurch oberflächenschädigende Wechselwirkungen zwischen den Spänen und dem Werkstück vermieden werden. Die Oberflächengüte wird hierdurch erhöht.

Bei einer weiteren Ausführungsform kann die Drehmaschine ein Gehäuse umfassen, welches einen Innenraum definiert und eine Arbeitsspindelfläche aufweist, die von der Arbeitsspindel durchdrungen wird, wobei die Tiefbohreinheit in der Grundstellung derart im Innenraum angeordnet ist, dass die Tiefbohreinheit die Arbeitsspindelfläche nicht überragt. Wie erwähnt, ist einer der Vorteile der vorliegenden Drehmaschine, dass die Tiefbohreinheit in der Grundstellung nicht mit Werkstücken in Berührung kommen kann, unabhängig davon, wie die Werkstücke dimensioniert sind. In dieser Ausführungsform ist die Grundstellung so gewählt, dass die Tiefbohreinheit nicht über die Arbeitsspindelfläche, also die Fläche, an welcher sich die Arbeitsspindel befindet, herausragt und somit keine Störkontur vorliegt. Folglich wird ein bestimmter Abstand zwischen dem Werkstück, welches in der Arbeitsspindel eingespannt ist, und der Tiefbohreinheit bereitgestellt, so dass die Tiefbohreinheit von Einflüssen, welche von der Bearbeitung des Werkstücks herrühren, weitgehend geschützt ist. Insbesondere können sich aufgrund des Abstands keine oder nur wenige Späne zur Tiefbohreinheit gelangen, die sich in der Grundstellung befindet. Insofern wird die Tiefbohreinheit geschont.

Eine Ausbildung der Erfindung betrifft eine Tiefbohreinheit zum Fertigen von Tiefbohrungen, welche an einem Maschinenbett einer Drehmaschine nach einem der vorherigen Ansprüche befestigbar ist, umfassend
- zumindest ein um eine Tiefbohrerdrehachse drehbar gelagertes Bohrfutter zum Aufnehmen eines Tiefbohrers,
- eine Tiefbohrer-Antriebseinheit zum Antreiben des Bohrfutters, und
- eine Verfahreinrichtung zum Verfahren des Bohrfutters entlang der Tiefbohrerdrehachse zwischen einer Grundstellung und einer Arbeitsstellung.

Erfindungsgemäß umfasst die Verfahreinrichtung einen Pneumatik-, Elektro- oder Hydraulikzylinder. Die Verwendung von Pneumatikzylindern, Elektrozylindern oder Hydraulikzylindern ermöglicht es, die Verfahreinrichtung einfach zu gestalten, so dass sie sich kostengünstig bereitstellen lässt.

Die technischen Effekte und Vorteile, die sich mit der vorschlagsgemäßen Tiefbohreinheit erreichen lassen, entsprechen denjenigen, die für die vorliegende Drehmaschine erörtert worden sind. Zusammenfassend sei darauf hingewiesen, dass die vorschlagsgemäße Tiefbohreinheit in bestehende Drehmaschinen eingebaut werden kann, so dass sich vorhandene Drehmaschinen entsprechend nachrüsten lassen. Aufgrund der Tatsache, dass sich zumindest das Bohrfutter der Tiefbohreinheit zwischen einer Grundstellung und einer Arbeitsstellung hin und her verfahren lässt, kann verhindert werden, dass die Tiefbohreinheit mit dem zu bearbeitenden Werkstück in Berührung kommen kann, wenn die Tiefbohreinheit außer Betrieb ist. Folglich können Werkstücke unabhängig von ihren Abmessungen mit der Drehmaschine bearbeitet werden, welche mit der vorschlagsgemäßen Tiefbohreinheit ausgerüstet ist.

Bei einer weiteren Ausbildung ist vorgesehen, dass die Tiefbohreinheit eine Lünetteneinheit zum Führen des Tiefbohrers aufweist. Wie eingangs erwähnt, sind die Tiefbohrer im Betrieb vergleichsweise hohen Biegemomenten ausgesetzt, die einerseits zu Schwingungen und andererseits zum Bruch des Tiefbohrers führen können. Mit der Lünetteneinheit kann zumindest ein Tiefbohrer beabstandet vom Bohrfutter geführt werden, so dass die Belastung des Tiefbohrers reduziert werden kann. Folglich werden die Schwingungen und die Gefahr des Bruchs des Tiefbohrers reduziert.

Eine fortentwickelte Ausbildung gibt vor, dass die Lünetteneinheit mit der Verfahreinrichtung entlang der Tiefbohrerdrehachse verfahrbar ist. In dieser Ausbildung bleibt der Abstand zwischen der Lünetteneinheit und dem Bohrfutter immer gleich. Insofern ändert sich die Lagerung des Tiefbohrers im Betrieb nicht, wodurch sich auch die Führung nicht verändert. In dieser Ausführungsform wird daher für gleichbleibende Bohrbedingungen gesorgt, wodurch die Qualität der Tiefbohrungen auf einem gleich bleibenden Niveau gehalten werden kann.

Bei einer weiteren Ausbildung weist die Tiefbohreinheit eine Kühlmittelzuführeinrichtung zum Zuführen von Kühlmittel zum Tiefbohrer auf. Wie mehrfach erwähnt, sind die Tiefbohrer im Betrieb hohen Belastungen ausgesetzt. Insofern kann die Gefahr eines Bruchs der Tiefbohrer mit einer ausreichenden Zufuhr von Kühlmittel deutlich reduziert werden. Dabei kann das Kühlmittel unter Hochdruck zum Tiefbohrer geführt werden. Weiterhin dient das unter Hochdruck zum Tiefbohrer geführte Kühlmittel auch zur Spanabfuhr, wodurch oberflächenschädigende Wechselwirkungen zwischen den Spänen und dem Werkstück vermieden werden.

Nach Maßgabe einer fortentwickelten Ausbildung weist die Verfahreinrichtung eine Verriegelungseinrichtung auf, mit welcher das Bohrfutter in der Arbeitsstellung verriegelbar ist. Je nach Ausgestaltung der Tiefbohreinheit kann die Verfahreinrichtung auch dazu genutzt werden, den Tiefbohrer im Betrieb vorzuschieben. Allerdings ist es bei vielen Drehmaschinen möglich, das Werkstück gegenüber den Werkzeugen zu bewegen, so dass die Verfahreinrichtung nicht dazu ausgelegt werden muss, diesen Vorschub gegenüber dem Werkstück bereitzustellen. Es genügt daher, die Verfahreinrichtung so auszugestalten, dass sie die Tiefbohreinheit zwischen der Arbeitsstellung und der Grundstellung hin und her bewegen kann. Besondere Anforderungen an die Bewegung bestehen in dieser Ausführungsform nicht. Ist die Arbeitsstellung einmal erreicht, wird diese mit der Verriegelungseinrichtung fixiert. Die Tiefbohreinheit und insbesondere das Bohrfutter können auch in Zwischenstellungen und in der Grundstellung mittels der Verriegelungseinrichtung fixiert werden. Auf diese Weise lässt sich die Tiefbohreinheit kostengünstig bereitstellen.

Beispielhafte Ausführungsformen der Erfindung werden im Folgenden unter Bezugnahme auf die beigefügten Zeichnungen näher erläutert. Es zeigen
- Figur 1A: einen Spindelstock einer erfindungsgemäßen Drehmaschine nach einer Ausführungsform anhand einer Seitenansicht,
- Figur 1B: die in Figur 1A dargestellte Drehmaschine anhand einer Schnittdarstellung entlang der in Figur 1A definierten Schnittebene A-A,
- Figur 1C: eine Draufsicht auf die in Figur 1A dargestellten Drehmaschine,
- Figur 1D: die in Figur 1A dargestellte Drehmaschine anhand einer Schnittdarstellung entlang der in Figur 1C definierten Schnittebene B-B,
- Figur 1E: eine perspektivische Darstellung der in Figur 1A dargestellten Drehmaschine anhand einer perspektivischen Ansicht, jeweils in einer Arbeitsstellung,
- Figur 2A: die in Figur 1A dargestellte Ausführungsform des Spindelstocks einer erfindungsgemäßen Drehmaschine anhand einer Seitenansicht,
- Figur 2B: die in Figur 2A dargestellte Drehmaschine anhand einer Schnittdarstellung entlang der in Figur 2A definierten Schnittebene C-C,
- Figur 2C: eine Draufsicht auf die in Figur 2A dargestellten Drehmaschine,
- Figur 2D: die in Figur 2A dargestellte Drehmaschine anhand einer Schnittdarstellung entlang der in Figur 2C definierten Schnittebene D-D, und
- Figur 2E: eine perspektivische Darstellung der in Figur 2A dargestellten Drehmaschine anhand einer perspektivischen Ansicht, jeweils in einer Grundstellung.

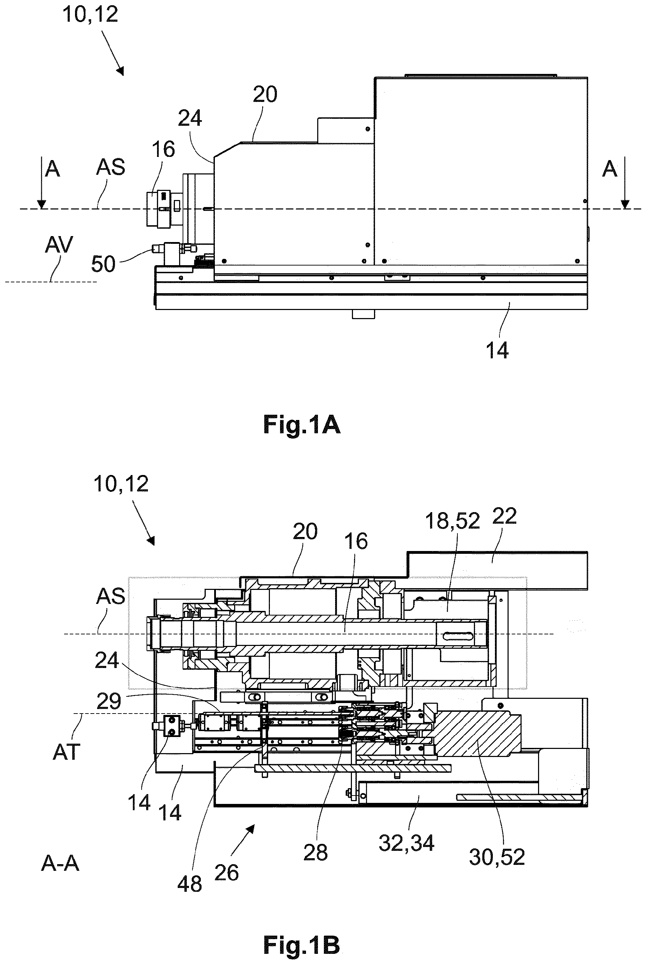

Da in allen Figuren 1A bis 2E dieselbe Ausführungsform eines Spindelstocks 10 einer vorschlagsgemäßen Drehmaschine 12 dargestellt ist, bezieht sich die nachfolgende Beschreibung auf alle Figuren, sofern nicht explizit etwas anderes erwähnt ist.

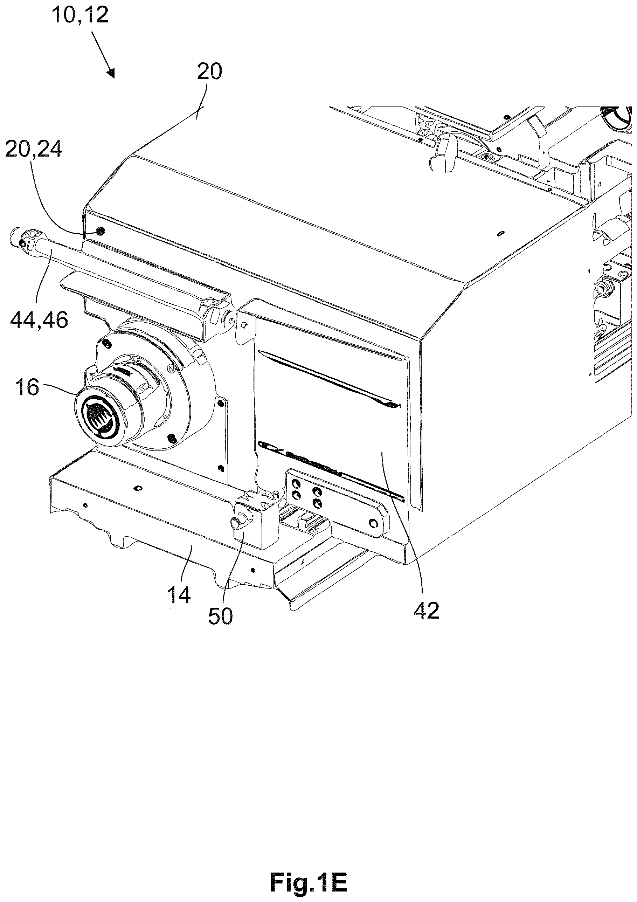

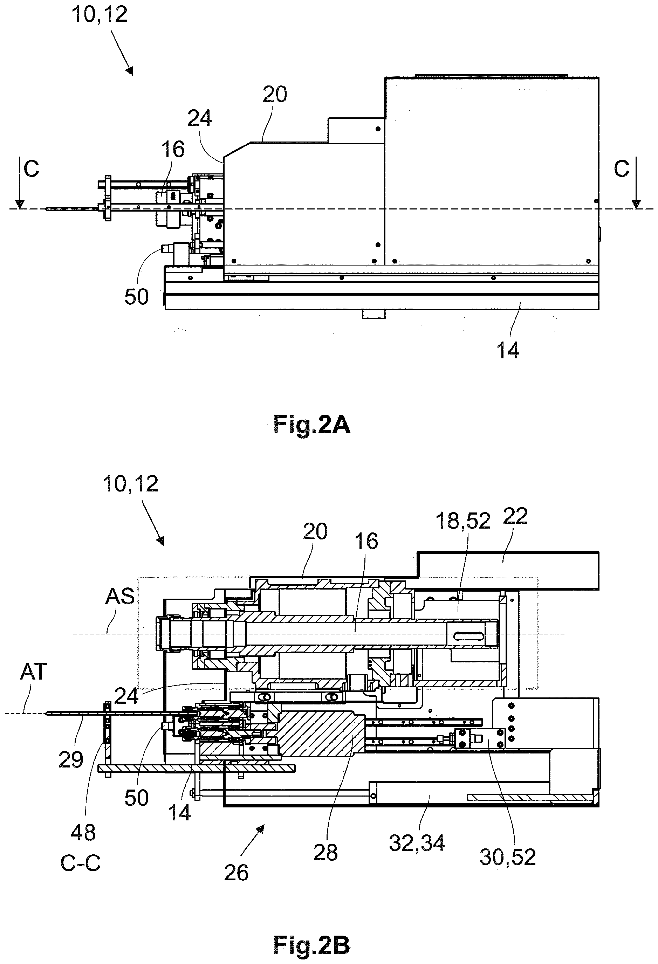

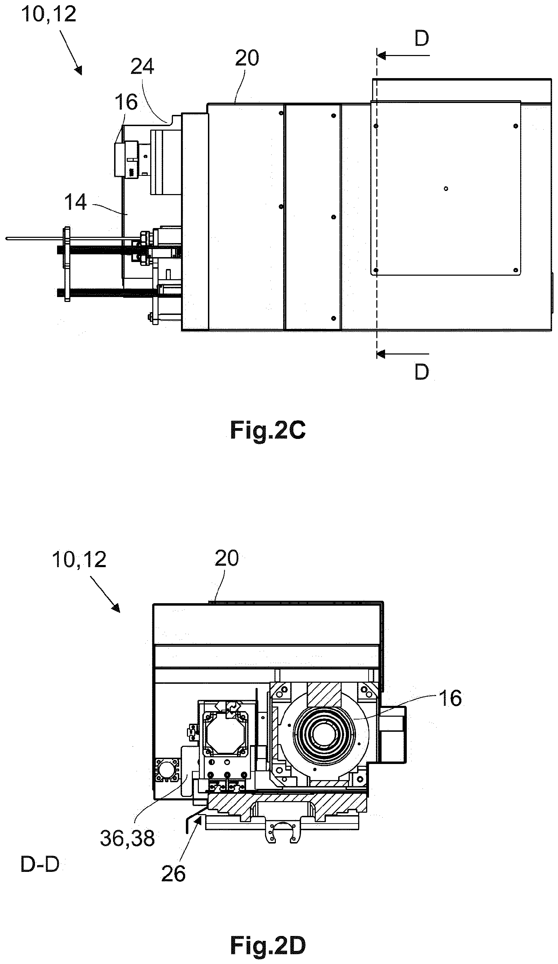

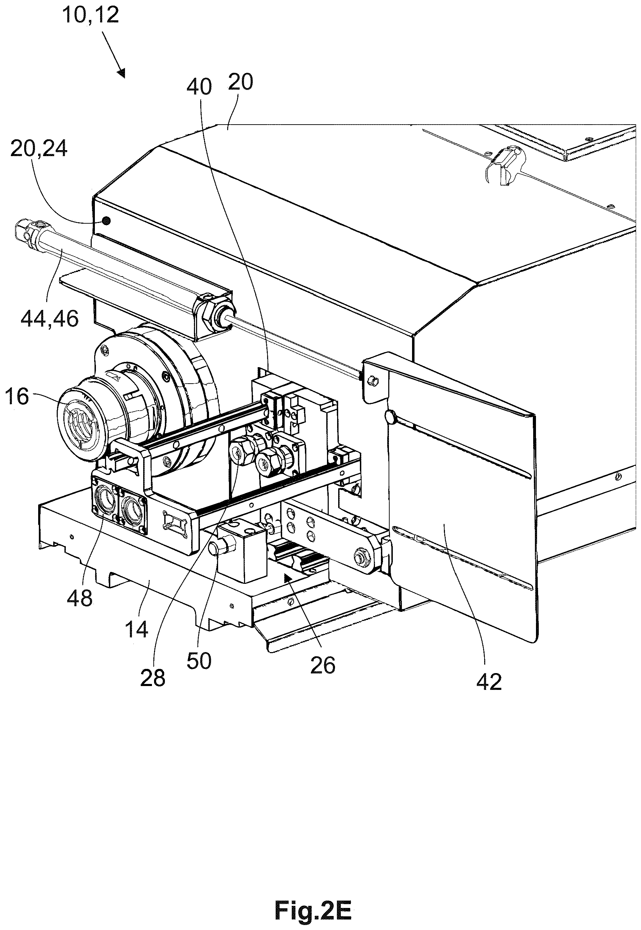

Die Drehmaschine 12 weist ein Maschinenbett 14 auf, mit welchem die Drehmaschine 12 auf einem nicht dargestellten Maschinengestell gelagert werden kann. Auf dem Maschinengestell kann auch ein nicht gezeigter Reitstock gelagert werden. Wie insbesondere aus den Figuren 1E und 2E hervorgeht, kann das Maschinenbett 14 nach Art eines Schlittens ausgeführt sein, der auf einem entsprechenden Gegenstück des Maschinengestells oder des Maschinenbetts 14 entlang einer Verschiebeachse AV verstellbar ist.

Der Spindelstock 10 umfasst eine Arbeitsspindel 16, welche um eine Spindeldrehachse AS drehbar im Spindelstock 10 und damit zumindest indirekt auch im Maschinenbett 14 gelagert ist. Die Spindeldrehachse AS verläuft im dargestellten Ausführungsbeispiel parallel zur Verschiebeachse AV. Die Arbeitsspindel 16 wird mittels einer Arbeitsspindel-Antriebseinheit 18 angetrieben. Zur Arbeitsspindel-Antriebseinheit 18 gehören ein Motor und ein Antriebsstrang, der die Drehung des Motors auf die Arbeitsspindel 16 überträgt (nicht explizit dargestellt).

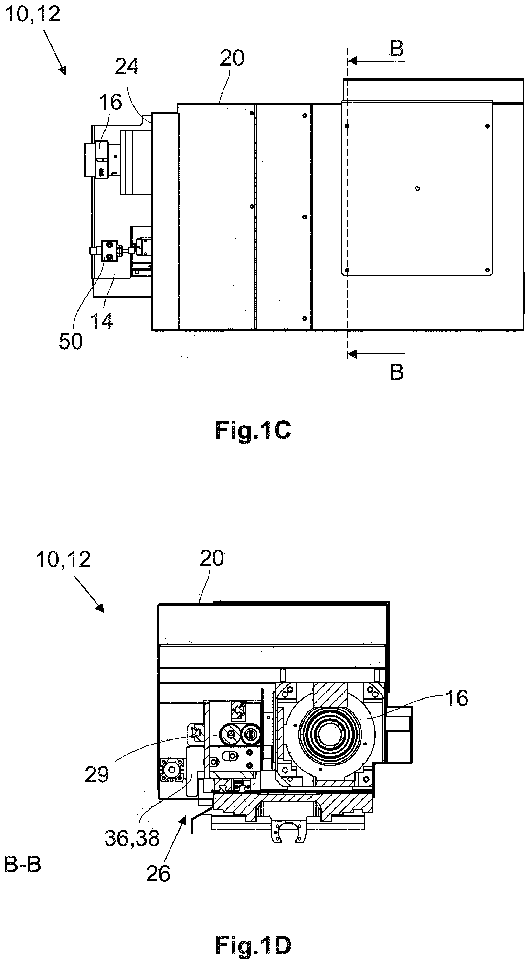

Wie insbesondere aus den Figuren 1A und 1C ersichtlich, umfasst die Drehmaschine 12 ein Gehäuse 20, das einen Innenraum 22 definiert, in welchem die wesentlichen Komponenten des Spindelstocks 10 angeordnet sind. Das Gehäuse 20 bildet eine Arbeitsspindelfläche 24, welche von der Arbeitsspindel 16 durchdrungen wird (siehe insbesondere Figuren 1E und 2E).

Im Gehäuse 20 ist zudem eine Tiefbohreinheit 26 zum Fertigen von Tiefbohrungen angeordnet, die folglich zumindest indirekt ebenfalls im Maschinenbett 14 gelagert ist und daher zusammen mit dem übrigen Spindelstock 10 entlang der Verschiebeachse AV verschoben werden kann. Die Tiefbohreinheit 26 kann auch außerhalb des Gehäuses 20 angeordnet sein (nicht dargestellt). Die Tiefbohreinheit 26 umfasst zwei Bohrfutter 28, in welche jeweils ein Tiefbohrer 29 eingespannt werden kann. Darüber hinaus umfasst die Tiefbohreinheit 26 eine Tiefbohrer-Antriebseinheit 30, mit welcher das Bohrfutter 28 und folglich der darin eingespannten Tiefbohrer 29 um eine Tiefbohrerdrehachse AT gedreht werden kann. Der Antriebsstrang der Tiefbohrer-Antriebseinheit 30 ist so gestaltet, dass die von einem nicht explizit dargestellten Antriebsmotor bereitgestellte Drehbewegung auf beide Bohrfutter 28 übertragen werden kann. Zudem ist eine Verfahreinrichtung 32 vorgesehen, die dazu dient, insbesondere das Bohrfutter 28, aber auch zumindest Teile der Tiefbohrer-Antriebseinheit 30 entlang der Tiefbohrerdrehachse AT zwischen einer Grundstellung und einer Arbeitsstellung zu verschieben. Die Figuren 1A bis 1E zeigen die Drehmaschine 12 in der Grundstellung, während die Figuren 2A bis 2E die Drehmaschine 12 in der Arbeitsstellung zeigen. Insbesondere aus einem Vergleich der Figuren 1E und 2E geht hervor, dass die Tiefbohreinheit 26 in der Grundstellung nicht über die Arbeitsspindelfläche 24 herausragt, während sie in der Arbeitsstellung zumindest teilweise über die Arbeitsspindelfläche 24 hervorragt. Zum Verschieben des Bohrfutters 28 zwischen der Grundstellung und der Arbeitsstellung umfasst die Antriebseinheit einen Zylinder 34, der beispielsweise als Hydraulikzylinder, Elektrozylinder oder Pneumatikzylinder ausgestaltet sein kann. Damit die Tiefbohreinheit 26 in der Arbeitsstellung fixiert werden kann, ist die erfindungsgemäße Drehmaschine 12 mit einer Verriegelungseinrichtung 36 versehen, welche in den Figuren 1D und 2D erkennbar ist. Die Verriegelungseinrichtung 36 umfasst einen Verriegelungszylinder 38, der so mit der Tiefbohreinheit 26 zusammenwirkt, dass ein unbeabsichtigtes Verschieben zumindest in der Arbeitsstellung nicht möglich ist. Jedoch kann die Verriegelungseinrichtung 36 auch dazu verwendet werden, die Tiefbohreinheit 26 in der Grundstellung zu verriegeln, um beispielsweise zu verhindern, dass sich die Tiefbohreinheit 26 beispielsweise infolge von Vibrationen, die bei der Bearbeitung eines Werkstücks auftreten können, unkontrolliert innerhalb des Gehäuses 20 verschiebt. Eine Verriegelung in Zwischenstellungen kann auch vorgesehen sein.

Wie ebenfalls insbesondere aus einem Vergleich der Figuren 1E und 2E zu erkennen ist, bildet die Arbeitsspindelfläche 24 eine Öffnung 40, durch welche das Bohrfutter 28 von der Grundstellung in die Arbeitsstellung verschoben werden kann. Die Öffnung 40 ist mit einer Klappe 42 verschließbar, die wiederum mit einem Bewegungsmechanismus 44, der im gezeigten Beispiel einen Stellzylinder 46 aufweist, geöffnet und verschlossen werden kann. Die Grundstellung der Tiefbohreinheit 26 ist dabei so gewählt, dass dann die Klappe 42 verschlossen werden kann (siehe Figur 1E), so dass die Tiefbohreinheit 26 vor Einflüssen, die bei der Bearbeitung von Werkstücken auftreten, geschützt wird. Derartige Einflüsse können die Bildung von Spänen sowie der Einsatz von Kühlmittel sein.

Die Tiefbohreinheit 26 umfasst ferner eine Lünetteneinheit 48, mit welcher der im Bohrfutter 28 eingespannte Tiefbohrer 29 geführt werden kann. Wie erwähnt, weist die Tiefbohreinheit 26 zwei Bohrfutter 28 auf, so dass die Lünetteneinheit 48 so eingerichtet ist, dass zwei Tiefbohrer 29 gleichzeitig geführt werden können. Die Lünetteneinheit 48 wird zusammen mit dem Bohrfutter 28 zwischen der Grundstellung und der Arbeitsstellung bewegt.

Darüber hinaus ist die Tiefbohreinheit 26 mit einer Kühlmittelzuführeinrichtung 50 ausgestattet, mit welcher das Kühlmittel zumindest zu einem der in die Bohrfutter 28 eingespannten Tiefbohrer 29 geführt werden kann. Die Kühlmittelzuführeinrichtung 50 kann so ausgestaltet sein, dass das Kühlmittel mit hohem Druck und mit einem entsprechend hohen Volumenstrom zum im Bohrfutter 28 eingespannten Tiefbohrer 29 geführt werden kann, um den Tiefbohrer 29 ausreichend zu kühlen.

Die Drehmaschine 12 kann auf folgende Weise betrieben werden: Ein nicht dargestelltes Werkstück kann mit einem Ende in die Arbeitsspindel 16 eingespannt und am anderen Ende vom Reitstock geführt werden. Mit einem nicht dargestellten Werkzeug, beispielsweise mit einem Drehmeißel, kann das Werkstück auf die gewünschte Weise bearbeitet werden. Während dieser Bearbeitung befindet sich die Tiefbohreinheit 26 in der Grundstellung, so dass diese nicht mit dem Werkstück in Berührung kommen kann und somit die Bearbeitung nicht stört.

Nach Abschluss der drehenden Bearbeitung kann das Bohrfutter 28 unter Verwendung der Verfahreinrichtung 32 von der Grundstellung in die Arbeitsstellung verfahren und mittels der Verriegelungseinrichtung 36 fixiert werden. Durch Aktivieren der Tiefbohrer-Antriebseinheit 30 wird der im Bohrfutter 28 eingespannte Tiefbohrer 29 in Drehung versetzt und mittels einer Bewegung des Spindelstocks 10 zum Werkstück hingeführt, so dass eine Tiefbohrung gefertigt werden kann. Sofern es sich um eine exzentrisch zur Drehachse des Werkstücks angeordnete Tiefbohrung handelt, darf das Werkstück während der Fertigung der Tiefbohrung nicht gedreht werden. Die Einspannung des Werkstücks in der Arbeitsspindel 16 kann so gestaltet werden, dass eine axiale Bewegung des Werkstücks in Bezug auf die Arbeitsspindel 16 möglich ist. Insofern ist es möglich, dasselbe Werkstück sowohl drehend zu bearbeiten als auch mit einer Tiefbohrung zu versehen. Selbstverständlich kann das Werkstück auch auf andere Weise eingespannt werden, insbesondere dann, wenn es nicht drehend bearbeitet werden muss. In diesem Fall wird ausschließlich die Tiefbohrung gefertigt.

Aufgrund der Tatsache, dass die Antriebsspindel die Antriebsspindel-Antriebseinheit und die Tiefbohreinheit 26 die Tiefbohrer-Antriebseinheit 30 aufweist, können diese unabhängig voneinander betrieben werden. Insbesondere kann die Drehrichtung, mit welcher das Bohrfutter 28 gedreht wird, unabhängig von der Drehrichtung der Arbeitsspindel 16 gewählt werden. Auch ein Wechsel der Drehrichtung des Bohrfutters 28 ist möglich, während die Arbeitsspindel 16 weiterhin in dieselbe Richtung gedreht wird.

Es ist aber auch möglich, eine gemeinsame Antriebseinheit 52 vorzusehen, mit welcher sowohl die Arbeitsspindel 16 als auch das Bohrfutter 28 angetrieben werden. Es ist damit möglich, die Arbeitsspindel 16 und das Bohrfutter 28 mechanisch gekoppelt anzutreiben.

### Bezugszeichenliste

- 10: Spindelstock
- 12: Drehmaschine
- 14: Maschinenbett
- 16: Arbeitsspindel
- 18: Arbeitsspindel-Antriebseinheit
- 20: Gehäuse
- 22: Innenraum
- 24: Arbeitsspindelfläche
- 26: Tiefbohreinheit
- 28: Bohrfutter
- 29: Tiefbohrer
- 30: Tiefbohr-Antriebseinheit
- 32: Verfahreinrichtung
- 34: Zylinder
- 36: Verriegelungseinrichtung
- 38: Verriegelungszylinder
- 40: Öffnung
- 42: Klappe
- 44: Bewegungsmechanismus
- 46: Stellzylinder
- 48: Lünetteneinheit
- 50: Kühlmittelzuführeinrichtung
- 52: gemeinsame Antriebseinheit

- AS: Spindeldrehachse
- AT: Tiefbohrerdrehachse
- AV: Verschiebeachse

## Patentansprüche

1. Drehmaschine (12) zum Bearbeiten von Werkstücken, umfassend
- ein Maschinenbett (14),
- eine Arbeitsspindel (16), welche um eine Spindeldrehachse (AS) drehbar im Maschinenbett (14) gelagert ist,
- eine Arbeitsspindel-Antriebseinheit (18) zum Antreiben der Arbeitsspindel (16),
- eine am Maschinenbett (14) befestigte Tiefbohreinheit (26) zum Fertigen von Tiefbohrungen mit
∘ zumindest einem um eine Tiefbohrerdrehachse (AT) drehbar gelagerten Bohrfutter (28) zum Aufnehmen eines Tiefbohrers (29), und
∘ einer Tiefbohrer-Antriebseinheit (30) zum Antreiben des Bohrfutters (28),
**dadurch gekennzeichnet, dass** die Drehmaschine
∘ einer Verfahreinrichtung (32) zum Verfahren des Bohrfutters (28) entlang der Tiefbohrerdrehachse (AT) zwischen einer Grundstellung und einer Arbeitsstellung umfasst, und
dass die Spindeldrehachse (AS) und die Tiefbohrerdrehachse (AT) parallel zueinander verlaufen.

2. Drehmaschine (12) nach Anspruch 1,
**dadurch gekennzeichnet, dass** die Arbeitsspindel-Antriebseinheit (18) und die Tiefbohrer-Antriebseinheit (30) von einer gemeinsamen Antriebseinheit (52) gebildet werden oder die Tiefbohrer-Antriebseinheit (30) von der Arbeitsspindel-Antriebseinheit (18) angetrieben wird.

3. Drehmaschine (12) nach einem der vorherigen Ansprüche, **dadurch gekennzeichnet, dass** die Tiefbohreinheit (26) eine Lünetteneinheit (48) zum Führen des Tiefbohrers (29) aufweist.

4. Drehmaschine (12) nach Anspruch 3,
**dadurch gekennzeichnet, dass** die Lünetteneinheit (48) mit der Verfahreinrichtung (32) entlang der Tiefbohrerdrehachse (AT) verfahrbar ist.

5. Drehmaschine (12) nach einem der vorherigen Ansprüche, **dadurch gekennzeichnet, dass** die Verfahreinrichtung (32) einen Pneumatik-, Elektro- oder Hydraulikzylinder (34) umfasst.

6. Drehmaschine (12) nach einem der vorherigen Ansprüche, **dadurch gekennzeichnet, dass** die Verfahreinrichtung (32) eine Verriegelungseinrichtung (36) aufweist, mit welcher das Bohrfutter (28) in der Arbeitsstellung verriegelbar ist.

7. Drehmaschine (12) nach einem der vorherigen Ansprüche, **dadurch gekennzeichnet, dass** die Tiefbohreinheit (26) eine Kühlmittelzuführeinrichtung (50) zum Zuführen von Kühlmittel zum Tiefbohrer (29) aufweist.

8. Drehmaschine (12) nach einem der vorherigen Ansprüche, **dadurch gekennzeichnet, dass** die Drehmaschine (12) ein Gehäuse (20) umfasst, welches einen Innenraum (22) definiert und eine Arbeitsspindelfläche aufweist, die von der Arbeitsspindel (16) durchdrungen wird, wobei die Tiefbohreinheit (26) in der Grundstellung derart im Innenraum (22) angeordnet ist, dass die Tiefbohreinheit (26) die Arbeitsspindelfläche nicht überragt.

9. Tiefbohreinheit (26) zum Fertigen von Tiefbohrungen, welche an einem Maschinenbett (14) einer Drehmaschine (12) nach einem der vorherigen Ansprüche befestigbar ist, umfassend
- zumindest ein um eine Tiefbohrerdrehachse (AT) drehbar gelagertes Bohrfutter (28) zum Aufnehmen eines Tiefbohrers (29), und
- eine Tiefbohrer-Antriebseinheit (30) zum Antreiben des Bohrfutters (28),
**dadurch gekennzeichnet, dass** die Tiefbohreinheit (26)
- eine Verfahreinrichtung (32) zum Verfahren des Bohrfutters (28) entlang der Tiefbohrerdrehachse (AT) zwischen einer Grundstellung und einer Arbeitsstellung umfasst, und
dass die Verfahreinrichtung (32) einen Pneumatik-, Elektro- oder Hydraulikzylinder (34) umfasst.

10. Tiefbohreinheit (26) nach Anspruch 9,
**dadurch gekennzeichnet, dass** die Tiefbohreinheit (26) eine Lünetteneinheit (48) zum Führen des Tiefbohrers (29) aufweist.

11. Tiefbohreinheit (26) nach Anspruch 10,
**dadurch gekennzeichnet, dass** die Lünetteneinheit (48) mit der Verfahreinrichtung (32) entlang der Tiefbohrerdrehachse (AT) verfahrbar ist.

12. Tiefbohreinheit (26) nach einem der Ansprüche 9 bis 11, **dadurch gekennzeichnet, dass** die Tiefbohreinheit (26) eine Kühlmittelzuführeinrichtung (50) zum Zuführen von Kühlmittel zum Tiefbohrer aufweist.

13. Tiefbohreinheit (26) nach einem der Ansprüche 9 bis 12, **dadurch gekennzeichnet, dass** die Verfahreinrichtung (32) eine Verriegelungseinrichtung (36) aufweist, mit welcher das Bohrfutter (28) in der Arbeitsstellung verriegelbar ist.

## Claims

1. Lathe (12) for the machining of workpieces, comprising
- a machine bed (14),
- a work spindle (16), which is rotatably mounted in the machine bed (14) around a spindle axis of rotation (AS),
- a work spindle drive unit (18) for driving the work spindle (16),
- a deep drilling unit (26), attached to the machine bed (14), for producing deep boreholes, having
∘ at least one drill chuck (28), rotatably mounted around a deep drill axis of rotation (AT), for holding a deep drill (29), and
∘ a deep drill drive unit (30) for driving the drill chuck (28),
**characterized in that** the lathe (12) comprises a movement device (32) for moving the drill chuck (28) along the deep drill axis of rotation (AT) between an initial position and a work position, and **in that** the spindle axis of rotation (AS) and the deep drill axis of rotation (AT) extend parallel to each other.

2. Lathe (12) in accordance with claim 1,
**characterized in that** the work spindle drive unit (18) and the deep drill drive unit (30) are formed by a common drive unit (52) or **in that** the deep drill drive unit (30) is driven by the work spindle drive unit (18).

3. Lathe (12) in accordance with either of the preceding claims,
**characterized in that** the deep drilling unit (26) comprises a bezel unit (48) for guiding the deep drill (29).

4. Lathe (12) in accordance with claim 3,
**characterized in that** the bezel unit (48) is movable along the deep drill axis of rotation (AT) by means of the movement device (32).

5. Lathe (12) in accordance with any of the preceding claims,
**characterized in that** the movement device (32) comprises a pneumatic, electro or hydraulic cylinder (34).

6. Lathe (12) in accordance with any of the preceding claims,
**characterized in that** the movement device (32) comprising a locking device (36).

7. Lathe (12) in accordance with any of the preceding claims,
**characterized in that** the deep drilling unit (26) comprises a cooling agent supply device (50) for supplying a cooling agent to the deep drill (29).

8. Lathe (12) in accordance with any of the preceding claims,
**characterized in that** the lathe (12) comprises a housing (20), which defines an inner space (22), and a work spindle surface, which is penetrated by the work spindle (16), wherein the deep drill unit (26), when in the initial position, is arranged in the inner space (22) such that the deep drilling unit (26) does not extend over the work spindle surface.

9. Deep drilling unit (26) for producing deep boreholes, which is attachable to a machine bed (14) or to a lathe (12) in accordance with any of the preceding claims, comprising
- at least one drill chuck (28), rotatably mounted around a deep drill axis of rotation (AT), for holding a deep drill, and
- a deep drill drive unit (30) for driving the drill chuck (28),
**characterized in that** the deep drilling unit (26) comprises a movement device (32) for moving the drill chuck (28) along the deep drill axis of rotation (AT) between an initial position and a work position, and **in that** the movement device (32) comprises a pneumatic, electro or hydraulic cylinder (34).

10. Deep drilling unit (26) in accordance with claim 9,
**characterized in that** the deep drilling unit (26) comprises a bezel unit (48) for guiding the deep drill (29).

11. Deep drilling unit (26) in accordance with claim 10,
**characterized in that** the bezel unit (48) is movable along the deep drill axis of rotation (AT) by means of the movement device (32).

12. Deep drilling unit (26) in accordance with any of claims 9 to 11,
**characterized in that** the deep drilling unit (26) comprises a cooling agent supply device (50) for supplying a cooling agent to the deep drill (29).

13. Deep drilling unit (26) in accordance with any of claims 9 to 12,
**characterized in that** the movement device (32) comprises a locking device (36), by means of which the drill chuck (28) is rendered lockable in the work position.

## Revendications

1. Tour (12) pour usiner des pièces comprenant :
- un banc de machine (14),
- une broche (16) montée à rotation autour d'un axe de broche (AS) sur le banc de machine (14),
- une unité d'entraînement de la broche (18) pour entraîner la broche (16),
- une unité de perçage profond (26) fixée au banc de machine (14) pour usiner des perçages profonds avec :
* au moins un mandrin (28) monté à rotation autour de l'axe de perçage profond (AT) pour recevoir un foret de perçages profonds (29), et
* une unité d'entraînement de foret de perçages profonds (30) pour
entraîner le mandrin (28),
tour **caractérisé en ce qu'**elle comprend :
* une installation de déplacement (32) pour déplacer le mandrin (28) le long de l'axe de perçage profond (AT) entre une position de base et une position de travail, et
- l'axe de broche (AS) et l'axe de perçage profond (AT) sont parallèles.

2. Tour (12) selon la revendication 1,
**caractérisé en ce que**
l'unité d'entraînement de la broche (18) et l'unité d'entraînement du foret profond (30) sont réalisés par une unité d'entraînement (52) commune ou l'unité d'entraînement de foret profond (30) est entraîné par l'unité d'entraînement de la broche (18).

3. Tour (12) selon l'une des revendications précédentes,
**caractérisé en ce que**
l'unité de perçage profond (26) comprend une lunette (48) pour guider le foret de perçage profond (29).

4. Tour (12) selon la revendication 3,
**caractérisé en ce que**
la lunette (48) est mobile avec l'installation de déplacement (32) le long de l'axe du foret de perçage profond (AT).

5. Tour (12) selon l'une des revendications précédentes,
**caractérisé en ce que**
l'installation de déplacement (32) comprend un vérin pneumatique, électrique ou hydraulique (34).

6. Tour (12) selon l'une des revendications précédentes,
**caractérisé en ce que**
l'installation de déplacement (32) comprend une installation de verrouillage (36) avec laquelle on verrouille le mandrin (28) en position de travail.

7. Tour (12) selon l'une des revendications précédentes,
**caractérisé en ce que**
l'unité de perçage profond (26) comporte une installation d'alimentation en agent de refroidissement (50) pour fournir l'agent de refroidissement au foret de perçage profond (29).

8. Tour (12) selon l'une des revendications précédentes,
**caractérisé en ce que**
le tour (12) comprend un boîtier (20) qui définit un volume intérieur (22) et une surface de broche, traversée par la broche (16), l'unité de perçage profond (26) étant en position de base dans le volume intérieur (22) et cette unité de perçage profond (26) ne dépasse pas de la surface de la broche.

9. Unité de perçage profond (26) pour réaliser des perçages profonds qui se fixent sur un banc de machine (14) d'un tour (12) selon l'une des revendications précédentes, comprenant :
- au moins un mandrin (28) monté à rotation autour d'un axe de foret de perçage profond (AT), pour recevoir un foret de perçage profond (29), et
- une unité d'entraînement de foret de perçage profond (30) pour entraîner le mandrin (28),
unité (26) **caractérisée en ce qu'**elle comprend :
- une installation de déplacement (32) pour déplacer le mandrin (28) le long de l'axe de perçage profond (AT) entre une position de base et une position de travail, et
- l'installation de déplacement (32) comprend un vérin pneumatique, électrique ou hydraulique (34).

10. Unité de perçage profond (26) selon la revendication 9,
**caractérisée en ce qu'**elle comprend
une lunette (48) pour guider le foret de perçage profond (29).

11. Unité de perçage profonde (26) selon la revendication 10,
**caractérisée en ce que**
la lunette (48) est mobile avec l'installation de déplacement (32) le long de l'axe de foret de perçage profond (AT).

12. Unité de perçage profond (26) selon l'une des revendications 9 à 11,
**caractérisée en ce que**
l'unité de perçage profond (26) comprend une installation d'alimentation en agent de refroidissement (50) pour fournir de l'agent de refroidissement au foret de perçage profond.

13. Unité de perçage profond (26) selon l'une des revendications 9 à 12,
**caractérisée en ce que**
l'installation de déplacement (32) comprend une installation de verrouillage (36) pour verrouiller le mandrin (28) en position de travail.
